# EUROPÄISCHE PATENTSCHRIFT

(11) **EP 3 534 075 B1**
(45) Veröffentlichungstag und Bekanntmachung des Hinweises auf die Patenterteilung: **26.02.2020**
(21) Anmeldenummer: 18159682.6
(22) Anmeldetag: 02.03.2018
(51) Int. Cl.: F16K 11/076, F24D 19/10, F16K 5/10, F16K 11/085

(54) **DREIWEGEMISCHER MIT VERSTELLBAREM KVS-WERT**
THREE-WAY MIXER WITH ADJUSTABLE KVS VALUE
MÉLANGEUR À TROIS VOIES À VALEUR KVS RÉGLABLE

(43) Veröffentlichungstag der Anmeldung: 04.09.2019
(73) Patentinhaber: AFRISO-Euro-Index GmbH, 74363 Güglingen (DE)
(72) Erfinder: VALTIN, Andreas, 75447 Sternenfels (DE); Von Olnhausen, Thomas, 75031 Eppingen-Kleingartach (DE); Heinz, Thomas, 74374 Zaberfeld (DE)
(74) Vertreter: Kohler Schmid Möbus Patentanwälte

(56) Entgegenhaltungen:
- DE-C1- 3 828 206
- DE-U- 1 909 759
- DE-U1-202017 101 386
- JP-A- 2013 044 415

## Beschreibung

Die vorliegende Erfindung betrifft einen Dreiwegemischer aufweisend ein Mischergehäuse mit einer zylindrischen Bohrung, mit einem ersten und einem zweiten Einlass, die beide mantelseitig in die zylindrische Bohrung münden, und mit einem Auslass, der mantelseitig von der zylindrischen Bohrung abgeht, sowie einen in der zylindrischen Bohrung um die Zylinderachse drehbar gelagerten, von außen betätigbaren Drehschieber in Form einer um die Zylinderachse teilkreisförmig ausgebildeten Sperrwand, die zwischen einer ersten Sperrstellung, in der der erste Einlass abgesperrt ist, und einer zweiten Sperrstellung, in der der zweite Einlass abgesperrt ist, verdrehbar ist, um das Mischungsverhältnis der beiden Einlasse einzustellen.

Ein derartiger Dreiwegemischer ist beispielsweise durch die DE 20 2017 101386 U1 bekannt geworden und wird zwischen Kesselvorlauf und Heizungsvorlauf einer Heizungsanlage angeordnet, um in Heizungsanlagen, bei denen die Kesseltemperatur technisch bedingt oberhalb der Vorlauftemperatur liegt, die Vorlauftemperatur abzusenken. Dem vom Heizkessel kommenden heißen Wasser des Kesselvorlaufs wird im Dreiwegemischer das beispielsweise von einer Fußbodenheizung kommende kühlere Rücklaufwasser beigemischt, um die Wassertemperatur des der Fußbodenheizung zugeführten Heizungsvorlaufs auf einen gewünschten Wert zu verringern. Der erste Eingang wird an den Kesselvorlauf z.B. einer Ölheizung, der zweite Eingang an den Heizungsrücklauf der Fußbodenheizung und der Ausgang an den Heizungsvorlauf der Fußbodenheizung angeschlossen. Der Drehschieber, auch Mischer-Küken genannt, ist als eine sich teilkreisförmig um die Zylinderachse ersteckende Sperrwand ausgebildet, die um 90° zwischen einer ersten Sperrstellung, in der sie den ersten Einlass absperrt, und einer zweiten Sperrstellung, in der sie den zweiten Einlass absperrt, verdrehbar, um das Mischungsverhältnis der beiden Einlasse einzustellen. Die Stellung des Drehschiebers kann manuell oder auch über einen elektrischen Antrieb (Stellmotor) erfolgen. Je nach erforderlicher Vorlauftemperatur schaltet die Heizungsregelung den Antrieb für einige Sekunden entweder in die eine oder andere Richtung, damit der Drehschieber die Einlässe jeweils sperrt oder unterschiedlich weit freigibt. Damit sich der Drehschieber leicht durch den Antrieb drehen lässt, ist zwangsweise etwas Spiel zwischen dem Drehschieber und der zylindrischen Bohrung notwendig bzw. vorhanden. Durch dieses Spiel ergibt sich allerdings eine Leckage in Abhängigkeit vom Volumenstrom, die zu einem Regelungsproblem führen kann.

Für eine ordnungsgemäße Regelfunktion ist die Bestimmung der erforderlichen Leistungsgröße des Dreiwegemischers entscheidend. Bei Dreiwegemischern werden zum einen die Gehäusegrößen (DN) als auch die entstehenden Druckverlustklassen (KVS) unterschieden. Wird ein zu groß dimensionierter Dreiwegemischer (d.h. mit zu hohem KVS-Wert) verwendet, kommt es zum Überschwingen der Regelfunktion. Der Stellmotor muss häufig nachregulieren, was zu erhöhten Verschleiß führt. Wird ein Dreiwegemischer mit zu kleinem KVS-Wert eingesetzt, kann die erforderliche Leistung nicht übertragen werden. Aus diesem Grund werden Dreiwegemischer in einer Vielzahl von Bau- und Leistungsgrößen angeboten. Es obliegt dem Planer einer Heizungsanlage, das richtige Produkt auszuwählen. Eine spätere Korrektur ist immer mit erheblichen Zusatzkosten und Aufwand verbunden. Es sind auch Dreiwegemischer bekannt, bei denen nachträglich zusätzliche Blenden eingebaut werden können, um einen gewünschten KVS-Wert zu erreichen. Nachteilig ist jedoch, dass ein zusätzliches Bauteil benötigt wird und bei nachträglichen Anpassungen die Heizungsanlage zuvor entleert werden muss.

Aus DE 38 28 206 C1 ist eine Mischervorrichtung für eine Warmwasserheizungsanlage bekannt, bei der das Mischergehäuse direkt an eine Pumpe angeflanscht wird. Das Mischergehäuse hat eine Mischkammer mit zwei Einlässen, die beide mantelseitig in die Mischkammer münden, und mit einem Auslass, der mantelseitig von der Mischkammer abgeht, sowie einen in der Mischkammer drehbar gelagerten, von außen betätigbaren Drehschieber in Form einer Sperrwand, um das Mischungsverhältnis der beiden Einlasse in der Mischerkammer einzustellen. Die Sperrwand ist als eine durch die Drehachse gehende gerade Wand ausgebildet, die in zwei Drehstellungen den Auslass mit dem einen Einlass verbindet und in zwei weiteren Drehstellungen den Auslass und den einen Einlass voneinander trennt. Im Auslass ist außerdem ein von außen betätigbares Ventilstellglied drehbar gelagert, um den Durchfluss durch den Auslass einzustellen.

Weiterhin ist aus JP 2013 044415 A ein Umschalt- bzw. Mischventil bekannt, bei dem der linke oder rechte Abgang durch eine Drehbewegung abgeblendet wird. Die

Aus DE 19 09 759 U ist schließlich noch eine Misch- und Umwälzpumpe mit eingebautem Mischorgan bekannt. Hierbei handelt es sich um eine Sonderform eines Vierwegemischers, bei dem der Drehschieber über mehrere Kammerbereiche verfügt.

Es ist demgegenüber die Aufgabe der Erfindung, einen Dreiwegemischer der eingangs genannten Art dahingehend weiterzubilden, dass der KVS-Wert ohne zusätzliche Bauteile eingestellt und somit auf die bisher handelsüblichen Dreiwegemischervarianten mit unterschiedlichem KVS-Wert verzichtet werden kann.

Diese Aufgabe wird bei dem eingangs genannten Dreiwegemischer erfindungsgemäß durch ein in der zylindrischen Bohrung vor dem Auslass beweglich gelagertes, von außen betätigbares Drosselelement zum Einstellen des Durchflusses durch den Auslass gelöst.

Die Duchflussverstellung (KVS-Wertverstellung) kann durch Bewegen des Drosselelements jederzeit ohne Entleeren der Heizungsanlage erfolgen. Es werden keine zusätzlichen Bauteile benötigt. Der Heizungsbauer, Großhändler oder Kesselhersteller erspart sich die Einlagerung von unterschiedlichen Mischern (oder Pumpengruppen) für die unterschiedlichen Leistungsklassen. Eine spätere Anpassung im realen Betrieb ist ohne Aufwand möglich.

In einer besonders bevorzugten Ausführungsform der Erfindung ist das Drosselelement durch eine in der zylindrischen Bohrung um die Zylinderachse drehbar gelagerte, von außen betätigbare Blende gebildet ist, die den Durchfluss durch den Auslass einstellt. Durch Verdrehen der KVS-Blende kann der KVS-Wert des Dreiwegemischers stufenlos auf den gewünschten KVS-Wert eingestellt werden. Vorzugsweise erstreckt sich die Blende teilkreisförmig um die Zylinderachse auf einem Radius erstreckt, der kleiner ist als der Radius der Sperrwand des Drehschiebers. Vorteilhaft ist die Blende hülsenförmig mit einer sich in Umfangsrichtung erstreckenden Blendenöffnung ausgebildet, welche sich auf der axialen Höhe des Auslasses befindet.

Die Blende kann mittels eines Betätigungshebels oder einer abgedichteten Achse verdreht werden. Über den Betätigungshebel kann die KVS-Blende auch noch nach dem Einbau verstellt werden, also auch wenn die Anlage bereits gefüllt ist und unter Druck steht.

In einer bevorzugten Weiterbildung weist die Sperrwand des Drehschiebers an ihren beiden axialen Enden jeweils zwei einander zugewandte Federarme auf, welche einen größeren Radius als die zylindische Bohrung aufweisen. In einer anderen bevorzugten Weiterbildung ist die Sperrwand des Drehschiebers an ihren beiden axialen Enden jeweils über Federarme mit einer Rückwand verbunden, welche einen größeren Radius als die zylindische Bohrung aufweist. Der Drehschieber ist abgedichtet in der einen Öffnung und die Blende abgedichtet in der anderen Öffnung der zylindrischen Bohrung angeordnet, sowie drehbar gelagert. Beim Einbau des Drehschiebers in die zylindrische Bohrung werden die beiden Federarme bzw. die Rückwand radial nach innen auf den Radius der zylindrischen Bohrung elastisch gedrückt, wodurch die Sperrwand gegen die Bohrungswand bzw. die jeweilige Einlassöffnung gedrückt wird. Das radiale Spiel wird auf ein Minimum reduziert und somit Leckage minimiert.

In anderen Ausführungsformen der Erfindung kann das Drosselelement auch durch einen in der zylindrischen Bohrung vor dem Auslass axial verschiebbaren, von außen betätigbaren Drosselkörper gebildet sein.

Vorzugsweise sind das Mischergehäuse aus Metall (z.B. Messing) und die übrigen Komponenten des Dreiwegemischers aus Kunststoff gebildet.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch einen erfindungsgemäßen Dreiwegemischer mit einer Drosselblende zum Einstellen des KVS-Werts;
- Fign. 2a, 2b: eine erste Ausführungsform des in Fig. 1 gezeigten erfindungsgemäßen Dreiwegemischers in einer perspektivischen Seitenansicht (Fig. 2a) und in einer Explosionsdarstellung (Fig. 2b);
- Fign. 3a, 3b: einen Drehschieber (Fig. 3a) und eine Drosselblende (Fig. 3b) des in Fig. 2 gezeigten Dreiwegemischers;
- Fign. 4a bis 4c: einen Längsschnitt des in Fig. 2 gezeigten Dreiwegemischers mit der Drosselblende in verschiedenen Drehstellungen;
- Fig. 5: einen modifierten Drehschieber;
- Fign. 6a, 6b: eine zweite Ausführungsform des in Fig. 1 gezeigten erfindungsgemäßen Dreiwegemischers in einer perspektivischen Seitenansicht (Fig. 6a) und in einer Einzelteildarstellung (Fig. 6b);
- Fig. 7: schematisch einen erfindungsgemäßen Dreiwegemischer mit einem axial verschiebbaren Drosselkörper zum Einstellen des KVS-Werts in einer Schnittansicht; und
- Fig. 8: schematisch einen nicht erfindungsgemäßen Dreiwegemischer mit einem querverschiebbaren Schieber zum Einstellen des KVS-Werts in einem Längsschnitt.

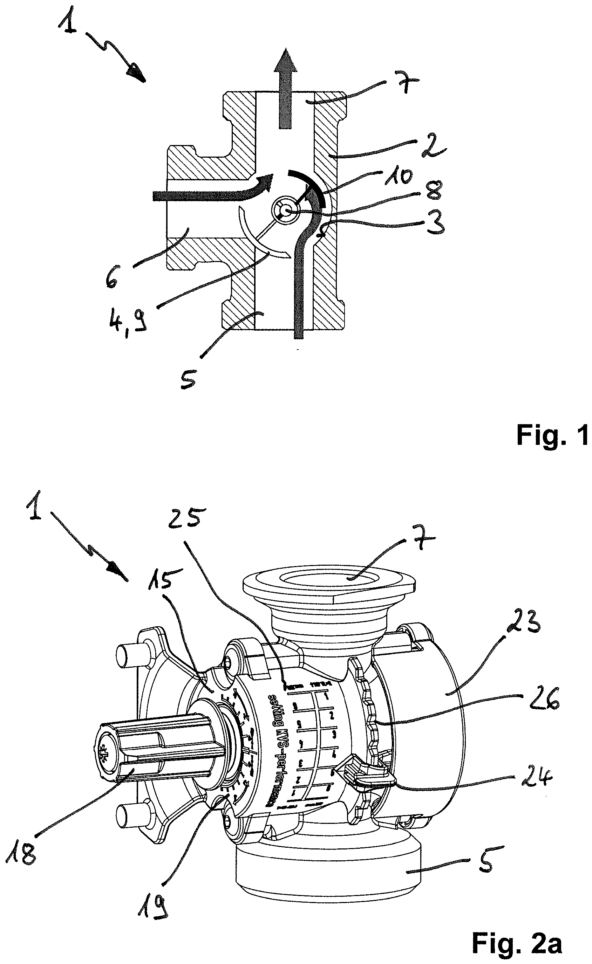

Der in **Fig. 1** schematisch gezeigte Dreiwegemischer **1** wird zwischen Kesselvorlauf und Heizungsvorlauf einer Heizungsanlage angeordnet und dient zum Absenken der Vorlauftemperatur in Heizungsanlagen, bei denen die Kesseltemperatur technisch bedingt oberhalb der Vorlauftemperatur liegt.

Der Dreiwegemischer 1 umfasst ein Mischergehäuse **2** mit einer zylindrischen Bohrung (Mischerkammer) **3** sowie einen in der zylindrischen Bohrung 3 drehbar gelagerten Drehschieber **4.** Das Mischergehäuse 2 hat einen ersten und einen zweiten Einlass **5, 6,** die beide mantelseitig in die zylindrische Bohrung 3 münden, und einen Auslass **7,** der mantelseitig von der Mischerkammer 3 abgeht. Der erste Eingang 5 wird an den Kesselvorlauf (z.B. einer Ölheizung), der zweite Eingang 6 an den Heizungsrücklauf einer Fußbodenheizung und der Ausgang 7 an den Heizungsvorlauf der Fußbodenheizung angeschlossen. Dem vom Heizkessel kommenden heißen Wasser des Kesselvorlaufs wird im Dreiwegemischer 1 das von der Fußbodenheizung kommende kühlere Rücklaufwasser beigemischt, um die Wassertemperatur des der Fußbodenheizung zugeführten Heizungsvorlaufs auf einen gewünschten Wert zu verringern.

Der Drehschieber 4 ist als eine sich etwa viertelkreisförmig um die Zylinderachse **8** ersteckende Sperrwand **9** ausgebildet, die - hier um 90° - zwischen einer ersten Sperrstellung, in der sie den ersten Einlass 5 absperrt, und einer zweiten Sperrstellung, in der sie den zweiten Einlass 6 absperrt, um die Zylinderachse 8 verdrehbar, um das Mischungsverhältnis der beiden Einlasse 5, 6 einzustellen.

Zum Einstellen des Durchflusses durch den Auslass 7 ist in der zylindrischen Bohrung 3 eine um die Zylinderachse 8 teilkreisförmig ausgebildete, von außen betätigbare Blende **10** drehbar um die Zylinderachse 8 gelagert, und zwar auf einem kleineren Radius als die Sperrwand 9. Die Blende 10 ist konzentrisch zu der Sperrwand 9 drehbar gelagert und bildet ein vor dem Auslass 7 angeordnetes Drosselelement. Je nach Stellung der Blende 10 wird der Durchfluss durch den Auslass 7 mehr oder weniger reduziert.

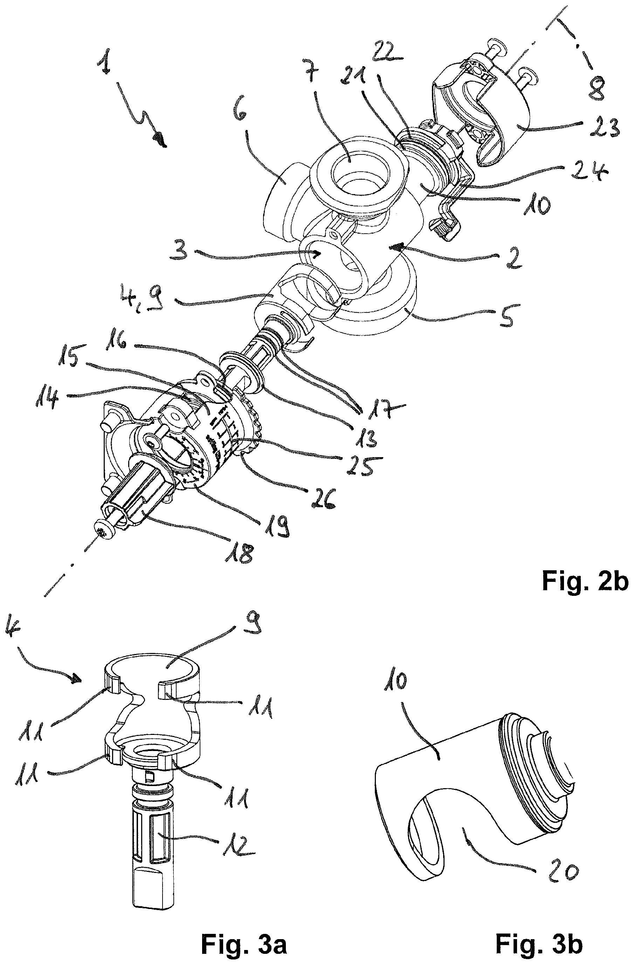

**Fign. 2a****,** **2b** zeigen eine erste Ausführungsform des Dreiwegemischers 1. Wie in **Fig. 3a** gezeigt, kann die Sperrwand 9 etwa halbkreisförmig ausgebildet sein und an ihren beiden axialen Enden jeweils zwei einander zugewandte Federarme **11** aufweisen, welche einen größeren Radius als die zylindische Bohrung 3 aufweisen. Der Drehschieber 4 weist an seinem in Fig. 3a unteren Ende noch eine Achse **12** auf, die mit der Sperrwand 9 einstückig verbunden ist. Die Achse 12 ist mittels einer Lagerscheibe **13** und einer Lagerbuchse **14** in einem ersten Lagerdeckel **15** drehbar gelagert, der an der einen Öffnung der zylindrische Bohrung 3 angeschraubt wird. Die Lagerbuchse 14 ist mittels eines Dichtrings **16** in der zylindrischen Bohrung 3 und die Achse 12 mittels zweier Dichtringe **17** in der Lagerbuchse 14 abgedichtet. Im Lagerdeckel 15 ist außen ein Handrad **18** drehbar gelagert, in das die Achse 12 mit ihrem unrunden Ende eingreift. An der Stirnseite des Lagerdeckels 15 befindet sich noch eine Skala **19** für das Handrad 18. Statt mit dem Handrad 18 kann die Achse 12 auch mit einem Stellmotor der Heizungsregelung verbunden sein. Beim Einbau des Drehschiebers 4 in die zylindrische Bohrung 3 werden die Federarme 17 radial nach innen auf den Radius der zylindrischen Bohrung 3 elastisch zusammengedrückt, wodurch die Sperrwand 9 gegen die jeweilige Einlassöffnung gedrückt wird. Das radiale Spiel wird auf ein Minimum reduziert und somit Leckage minimiert. Durch die Federarme 17 wird das notwendige Drehmoment zum Drehen des Drehschiebers 4 nur unwesentlich erhöht.

Wie in **Fig. 3b** gezeigt, kann die Blende 10 als eine einseitig geschlossene Hülse mit einer sich in Umfangsrichtung z.B. um etwa 180° erstreckenden Blendenöffnung **20** ausgebildet sein, die sich auf der axialen Höhe des Auslasses 7 befindet und deren Öffnungsbreite mindestens dem Öffnungsdurchmesser des Auslasses 7 entspricht. An ihrem geschlossen Hülsenende weist die Blende 10 einen Lagerbund **21** auf, mit dem die Blende 10 in der anderen Öffnung der zylindrische Bohrung 3 drehbar gelagert und mittels eines Dichtrings **22** abgedichtet ist. Die Blende 10 ist konzentrisch innerhalb des Drehschiebers 4 gelagert. Ein an das Mischergehäuse 2 angeschraubter zweiter Lagerdeckel **23** sichert die Blende 10 in der zylindrischen Bohrung 3. Mittels eines angeformten Betätigungshebels **24** kann die Blende 10 anhand einer am ersten Lagerdeckel 15 umfangsseitig angebrachten Skala **25** verdreht werden. Am ersten Lagerdeckel 15 ist weiterhin ein Rastkranz **26** mit mehreren in Umfangsrichtung angeordneten Rastmulden vorhanden, um den Betätigungshebel 24 und damit die Blende 10 in einer eingestellten Drehposition zu sichern. Über die seitliche Skala 25 wird der Einstellwert in mehreren Stufen angezeigt. Die Verstellung kann jederzeit ohne Entleeren der Anlage erfolgen. Durch die Verrastung wird ein unbeabsichtigtes Verstellen der Blende 10 verhindert.

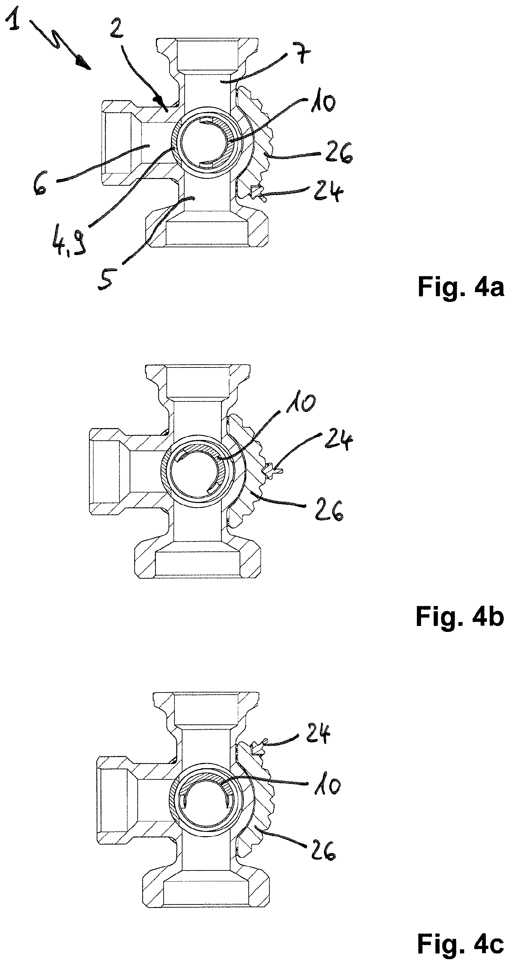

Wie in **Fign. 4a bis 4c** gezeigt, wird je nach Drehstellung der Blende 10 der Durchfluss des Dreiwegemischers 1 mehr oder weniger reduziert. In der Stellung MAX (Fig. 4a) befindet sich die Blendenöffnung 20 vor dem Auslass 7, und es wird ein KVS von 10 erreicht, d.h., es findet keine Durchflussreduktion am Auslass 7 statt. Durch Verdrehen des Betätigungshebels in 15°-Schritten wird die Blende 10 entsprechend immer weiter vor den Auslass 7 gedreht (Fig. 4b). In der Stellung MIN (Fig. 4c) befindet sich die Blende 10 vor dem Auslass 7, und der KVS-Wert ist auf etwa 2,5 reduziert. Durch geometrische Anpassungen können diese KVS-Werte entsprechend der geforderten Spezifikation angepasst werden. Die KVS-Werte sind unabhängig von der Position des Drehschiebers 4, der hier in seiner den zweiten Einlass 6 sperrenden Sperrstellung gezeigt ist.

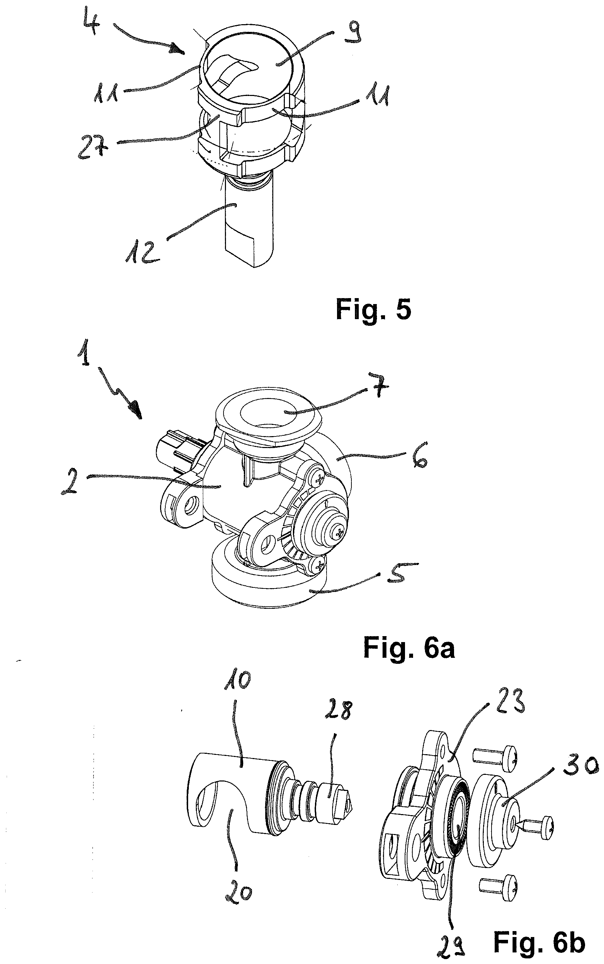

Vom Drehschieber der Fig. 3a unterscheidet sich der in **Fig. 5** gezeigte Drehschieber 4 dadurch, dass hier die Sperrwand 9 an ihren beiden axialen Enden jeweils über die Federarme 11 mit einer Rückwand **27** verbunden ist, welche einen größeren Radius als die zylindische Bohrung 3 aufweist. Beim Einbau des Drehschiebers 4 in die zylindrische Bohrung 3 wird die Rückwand 27 radial nach innen auf den Radius der zylindrischen Bohrung 3 elastisch gedrückt, wodurch die Sperrwand 9 gegen die jeweilige Einlassöffnung gedrückt wird. Das radiale Spiel wird auf ein Minimum reduziert und somit Leckage minimiert.

**Fign. 6a, 6b** zeigen eine zweite Ausführungsform des Dreiwegemischers 1, bei dem die Blende 10 statt des Betätigungsarms eine abgedichtete Achse **28** aufweist, die über eine Öffnung **29** des abgedichteten zweiten Lagerdeckels 23 zugänglich ist. Durch manuelles Drehen der Achse 28 über das Handrad 30 kann die Blende 10 verdreht und somit der Durchfluss des Dreiwegemischers 1 eingestellt werden. Die Öffnung 29 (mit umgebendem Einrastkranz) wird nach der vorgenommenen Einstellung durch Anziehen der Schraube zum Handrad **30** fixiert werden.

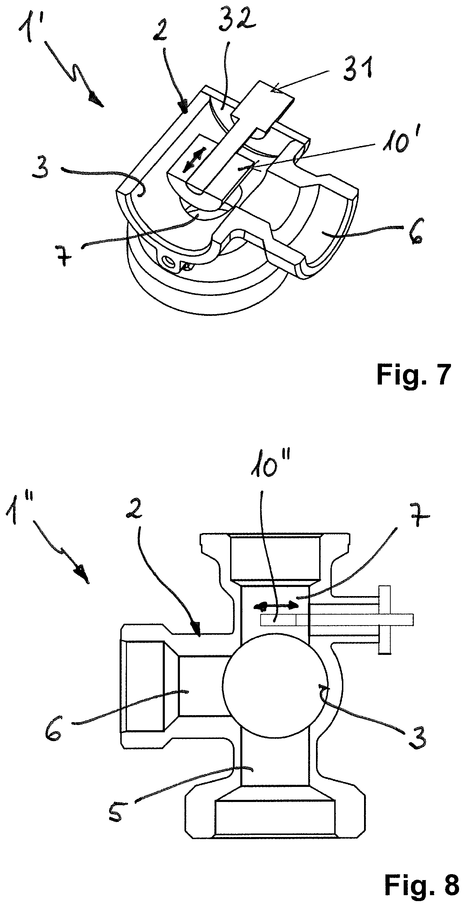

Vom Drehschieber der Fign. 2 bis 6 unterscheidet sich der in **Fig. 7** gezeigte Dreiwegemischer **1'** dadurch, dass hier das Drosselelement durch einen in der zylindrischen Bohrung 3 vor dem Auslass 7 axial verschiebbaren, z.B. zylindrischen Drosselkörper **10'** gebildet ist, der mittels eines Spindelantriebs **31** von außen betätigbar ist. Die Spindel des Spindelantriebs 31 ist abgedichtet in einer Lagerscheibe **32** verschiebbar geführt, welche die Öffnung der zylindrischen Bohrung 3 dicht verschließt. Der Drosselkörper 10' ist konzentrisch innerhalb des nicht gezeigten Drehschiebers 4 angeordnet. Durch Drehen der Spindel kann der Drosselkörper 10' vor dem Auslass 7 in Richtung des Doppelpfeils vor- und zurückgeschoben und so der Durchfluss des Dreiwegemischers 1' mehr oder weniger reduziert werden.

Bei den in Fign. 2 bis 7 gezeigten Ausführungsformen kann der Drehschieber 4 und die Blende 10 auch vertauscht montiert werden, also an der jeweils anderen Öffnung der zylindrischen Bohrung 3.

Vom Drehschieber der Fign. 2 bis 6 unterscheidet sich der in **Fig. 8** gezeigte Dreiwegemischer **1"** dadurch, dass hier das Drosselelement durch einen Schieber **10"** gebildet ist, der im Auslass 7 querverschiebbar geführt ist, um den Auslassquerschnitt unterschiedlich weit freizugeben. Durch Vor- und Zurückschieben des Schiebers 10" in Richtung des Doppelpfeils kann so der Durchfluss des Dreiwegemischers 1" mehr oder weniger reduziert werden.

## Patentansprüche

1. Dreiwegemischer (1; 1') aufweisend ein Mischergehäuse (2) mit einer zylindrischen Bohrung (3), mit einem ersten und einem zweiten Einlass (5, 6), die beide mantelseitig in die zylindrische Bohrung (3) münden, und mit einem Auslass (7), der mantelseitig von der zylindrischen Bohrung (3) abgeht, sowie einen in der zylindrischen Bohrung (3) um die Zylinderachse (8) drehbar gelagerten, von außen betätigbaren Drehschieber (4) in Form einer um die Zylinderachse (8) teilkreisförmig ausgebildeten Sperrwand (9), die zwischen einer ersten Sperrstellung, in der der erste Einlass (5) abgesperrt ist, und einer zweiten Sperrstellung, in der der zweite Einlass (6) abgesperrt ist, verdrehbar ist, um das Mischungsverhältnis der beiden Einlasse (5, 6) einzustellen, **gekennzeichnet durch** ein in der zylindrischen Bohrung (3) vor dem Auslass (7) beweglich gelagertes, von außen betätigbares Drosselelement (10; 10') zum Einstellen des Durchflusses durch den Auslass (7).

2. Dreiwegemischer nach Anspruch 1, **dadurch gekennzeichnet, dass** das Drosselelement durch eine in der zylindrischen Bohrung (3) um die Zylinderachse (8) drehbar gelagerte, von außen betätigbare Blende (10) gebildet ist, die den Durchfluss durch den Auslass (7) einstellt.

3. Dreiwegemischer nach Anspruch 2, **dadurch gekennzeichnet, dass** die Blende (10) sich teilkreisförmig um die Zylinderachse (8) auf einem Radius erstreckt, der kleiner ist als der Radius der Sperrwand (9) des Drehschiebers (4).

4. Dreiwegemischer nach Anspruch 2 oder 3, **dadurch gekennzeichnet, dass** die Blende (10) hülsenförmig mit einer sich in Umfangsrichtung erstreckenden Blendenöffnung (20) ausgebildet ist, welche sich auf der axialen Höhe des Auslasses (7) befindet.

5. Dreiwegemischer nach einem der Ansprüche 2 bis 4, **dadurch gekennzeichnet, dass** die Blende (10) einen Betätigungshebel (24) aufweist, mittels dem die Blende (10), insbesondere anhand einer gehäuseseitig um die Zylinderachse (8) herum angeordneten Skala (25), verdrehbar ist.

6. Dreiwegemischer nach einem der Ansprüche 2 bis 4, **dadurch gekennzeichnet, dass** die Blende (10) eine abgedichtete Achse (28) aufweist, mittels der die Blende (10) verdrehbar ist.

7. Dreiwegemischer nach einem der vorhergehenden Ansprüche, **dadurch gekennzeichnet, dass** die Sperrwand (9) des Drehschiebers (4) an ihren beiden axialen Enden jeweils zwei einander zugewandte Federarme (11) aufweist, welche einen größeren Radius als die zylindische Bohrung (3) aufweisen.

8. Dreiwegemischer nach einem der Ansprüche 1 bis 6, **dadurch gekennzeichnet, dass** die Sperrwand (9) des Drehschiebers (4) an ihren beiden axialen Enden jeweils über Federarme (11) mit einer Rückwand (27) verbunden ist, welche einen größeren Radius als die zylindische Bohrung (3) aufweist.

9. Dreiwegemischer nach einem der Ansprüche 2 bis 8, **dadurch gekennzeichnet, dass** der Drehschieber (4) abgedichtet in der einen Öffnung und die Blende (10) abgedichtet in der anderen Öffnung der zylindrischen Bohrung (3) drehbar gelagert sind.

10. Dreiwegemischer nach Anspruch 1, **dadurch gekennzeichnet, dass** das Drosselelement durch einen in der zylindrischen Bohrung (3) vor dem Auslass (7) axial verschiebbaren, von außen betätigbaren Drosselkörper (10') gebildet ist.

11. Dreiwegemischer nach einem der vorhergehenden Ansprüche, **dadurch gekennzeichnet, dass** das Mischergehäuse (2) aus Metall und die übrigen Komponenten des Dreiwegemischers (1; **1'**) aus Kunststoff gebildet sind.

## Claims

1. Three-way mixer (1; 1') comprising a mixer housing (2) having a cylindrical bore (3), having a first and a second inlet (5, 6), which both lead to the cylindrical bore (3) on the jacket side, and having an outlet (7) that extends away from the cylindrical bore (3) on the jacket side, and comprising a rotary valve (4) that is mounted in the cylindrical bore (3) so as to be rotatable about the cylinder axis (8), can be actuated from the outside, and is formed as a blocking wall (9) that is formed as a partial circle around the cylinder axis (8) and can be rotated between a first blocking position in which the first inlet (5) is blocked, and a second blocking position, in which the second inlet (6) is blocked, in order to adjust the mixing ratio of the two inlets (5, 6),
**characterized by** a throttle element (10; 10'), which is movably mounted in the cylindrical bore (3) in front of the outlet (7) and can be actuated from the outside for adjusting the flow rate through the outlet (7).

2. Three-way mixer according to claim 1, **characterized in that** the throttle element is formed by a diaphragm (10) which is mounted in the cylindrical bore (3) so as to be rotatable about the cylinder axis (8), can be actuated from the outside, and adjusts the flow rate through the outlet (7).

3. Three-way mixer according to claim 2, **characterized in that** the diaphragm (10) extends in the shape of a partial circle about the cylinder axis (8) along a radius which is smaller than the radius of the blocking wall (9) of the rotary valve (4).

4. Three-way mixer according to claim 2 or 3, **characterized in that** the diaphragm (10) is designed in the shape of a sleeve having a diaphragm opening (20) that extends in the peripheral direction and is located at the axial level of the outlet (7).

5. Three-way mixer according to any one of the claims 2 to 4, **characterized in that** the diaphragm (10) comprises an operating lever (24) by means of which the diaphragm (10) can be rotated, in particular using a scale (25) that is arranged around the cylinder axis (8) on the housing side.

6. Three-way mixer according to any one of the claims 2 to 4, **characterized in that** the diaphragm (10) comprises a sealed axis (28) by means of which the diaphragm (10) can be rotated.

7. Three-way mixer according to any one of the preceding claims, **characterized in that** each of the two axial ends of the blocking wall (9) of the rotary valve (4) comprises two mutually facing spring arms (11) which have a larger radius than the cylindrical bore (3).

8. Three-way mixer according to any one of the claims 1 to 6, **characterized in that**, at its two axial ends, the blocking wall (9) of the rotary valve (4) is connected to a rear wall (27) via spring arms (11) in each case, the rear wall having a larger radius than the cylindrical bore (3).

9. Three-way mixer according to any one of the claims 2 to 8, **characterized in that** the rotary valve (4) is mounted in a sealed manner in one opening so as to be rotatable and the diaphragm (10) is mounted in a sealed manner in the other opening of the cylindrical bore (3) so as to be rotatable.

10. Three-way mixer according to claim 1, **characterized in that** the throttle element is formed by a throttle body (10') which can be axially displaced in the cylindrical bore (3) in front of the outlet (7) and can be operated from the outside.

11. Three-way mixer according to any one of the preceding claims, **characterized in that** the mixer housing (2) is formed of metal and the other components of the three-way mixer (1; 1') are formed of plastic material.

## Revendications

1. Mélangeur à trois voies (1 ; 1') présentant un boîtier de mélangeur (2) avec un alésage cylindrique (3), avec une première et une deuxième entrée (5, 6) qui débouchent toutes deux dans l'alésage cylindrique (3) côté enveloppe, et avec une sortie (7) qui part de l'alésage cylindrique (3) côté enveloppe ainsi qu'une vanne rotative (4) qui est montée dans l'alésage cylindrique (3) de manière à pouvoir tourner autour de l'axe de cylindre (8) et peut être actionnée de l'extérieur sous la forme d'une paroi de barrage (9) en forme de secteur circulaire entourant l'axe de cylindre (8), qui peut tourner entre une première position de blocage, dans laquelle la première entrée (5) est obturée, et une deuxième position de blocage, dans laquelle la deuxième entrée (6) est obturée, afin de régler le rapport de mélange des deux entrées (5, 6), **caractérisé par** un élément d'étranglement (10 ; 10') qui est monté mobile dans l'alésage cylindrique (3) devant la sortie (7) et qui peut être actionné de l'extérieur pour régler le débit à travers la sortie (7).

2. Mélangeur à trois voies selon la revendication 1, **caractérisé en ce que** l'élément d'étranglement est formé par un obturateur (10) qui est monté dans l'alésage cylindrique (3) de manière à pouvoir tourner autour de l'axe de cylindre (8), peut être actionné de l'extérieur et règle le débit à travers la sortie (7).

3. Mélangeur à trois voies selon la revendication 2, **caractérisé en ce que** l'obturateur (10) s'étend en forme de secteur circulaire autour de l'axe de cylindre (8) sur un rayon qui est inférieur au rayon de la paroi de barrage (9) de la vanne rotative (4).

4. Mélangeur à trois voies selon la revendication 2 ou 3, **caractérisé en ce que** l'obturateur (10) est réalisé en forme de manchon avec une ouverture d'obturateur (20) s'étendant dans la direction circonférentielle, qui est située à la hauteur axiale de la sortie (7).

5. Mélangeur à trois voies selon l'une des revendications 2 à 4, **caractérisé en ce que** l'obturateur (10) présente un levier d'actionnement (24) au moyen duquel l'obturateur (10) peut être tourné, en particulier au moyen d'une échelle graduée (25) disposée autour de l'axe de cylindre (8) côté boîtier.

6. Mélangeur à trois voies selon l'une des revendications 2 à 4, **caractérisé en ce que** l'obturateur (10) présente un arbre étanchéifié (28) au moyen duquel l'obturateur (10) peut être tourné.

7. Mélangeur à trois voies selon l'une des revendications précédentes, **caractérisé en ce que** la paroi de barrage (9) de la vanne rotative (4) présente à chacune de ses deux extrémités axiales deux bras élastiques (11) qui se font face et présentent un rayon supérieur à celui de l'alésage cylindrique (3).

8. Mélangeur à trois voies selon l'une des revendications 1 à 6, **caractérisé en ce que** la paroi de barrage (9) de la vanne rotative (4) est reliée à chacune de ses deux extrémités axiales, par l'intermédiaire de bras élastiques (11), à une paroi arrière (27) qui présente un rayon supérieur à celui de l'alésage cylindrique (3).

9. Mélangeur à trois voies selon l'une des revendications 2 à 8, **caractérisé en ce que** la vanne rotative (4) est montée tournante de manière étanche dans une ouverture et l'obturateur (10) de manière étanche dans l'autre ouverture de l'alésage cylindrique (3).

10. Mélangeur à trois voies selon la revendication 1, **caractérisé en ce que** l'élément d'étranglement est formé par un corps d'étranglement (10') qui peut coulisser axialement dans l'alésage cylindrique (3) devant la sortie (7) et peut être actionné de l'extérieur.

11. Mélangeur à trois voies selon l'une des revendications précédentes, **caractérisé en ce que** le boîtier de mélangeur (2) est réalisé en métal et les autres composants du mélangeur à trois voies (1 ; 1') en matière plastique.
